# EUROPÄISCHE PATENTSCHRIFT

(11) **EP 4 306 074 B1**
(45) Veröffentlichungstag und Bekanntmachung des Hinweises auf die Patenterteilung: **21.05.2025**
(21) Anmeldenummer: 22184944.1
(22) Anmeldetag: 14.07.2022
(51) Int. Cl.: A61C 13/00, B23Q 17/09

(54) **HERSTELLUNGSGERÄT FÜR EINE DENTALE RESTAURATION**
DENTAL RESTORATION MANUFACTURING APPARATUS
APPAREIL DE FABRICATION POUR UNE PROTHÈSE DENTAIRE

(43) Veröffentlichungstag der Anmeldung: 17.01.2024
(73) Patentinhaber: Ivoclar Vivadent AG, 9494 Schaan (LI)
(72) Erfinder: Frey, Alen, 6800 Feldkirch (AT); Reinhardt, Jonas, 7206 Igis (CH); Gurschler, Hannes, 6700 Bludenz (AT); Wellinger, Christian, 6714 Nüziders (AT)
(74) Vertreter: Baldus, Oliver

(56) Entgegenhaltungen:
- CN-B- 103 760 820
- DE-A1- 102010 061 116
- JP-B2- 6 712 236
- US-A1- 2009 129 882
- SHAO H ET AL: "A cutting power model for tool wear monitoring in milling", INTERNATIONAL JOURNAL OF MACHINE TOOL DESIGN AND RESEARCH, PERGAMON PRESS, OXFORD, GB, vol. 44, no. 14, 1 November 2004 (2004-11-01), pages 1503 - 1509, XP004567275, ISSN: 0020-7357, DOI: 10.1016/J.IJMACHTOOLS.2004.05.003

## Beschreibung

Die vorliegende Erfindung betrifft ein Herstellungsgerät für eine dentale Restauration und ein Herstellungsverfahren für eine dentale Restauration.

Gegenwärtig werden bei der Herstellung von dentalen Restaurationen durch Fräs- oder Schleifverfahren die abgefahrenen Laufmeter eines Schleifers entlang von Fräsbahnen aufsummiert, um eine Abnutzung des Schleifers zu bestimmen. Sobald ein Erfahrungswert erreicht ist, wird eine Meldung an einen Bediener ausgegeben, dass der Schleifer erneuert werden sollte. Allerdings kann hierbei die tatsächliche Abnutzung des Schleifers nicht ermittelt werden. Auch wenn ein Benutzer einen alten oder defekten Schleifer einsetzt, würde eine Maschine dies nicht bemerken. Daher sind diese Verfahren fehleranfällig. JP 6 712236 B2 offenbart eine Fräsmaschine mit einem Bearbeitungswerkzeug, bei der der Verschleiß des Bearbeitungswerkzeuges auf Basis eines Spindelmotorstroms der Fräsmaschine ermittelt wird.

Es ist daher die technische Aufgabe der vorliegenden Erfindung, einen Verschleiß eines Werkzeugs bei der Bearbeitung oder Herstellung einer dentalen Restauration genauer vorherzusagen.

Diese technische Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch ein Herstellungsgerät für eine dentale Restauration gelöst, mit einem Werkzeug zum Bearbeiten eines Rohlings; einer Erfassungsvorrichtung zum Erfassen eines Spindelstroms einer Drehspindel; und einer Berechnungsvorrichtung zum Berechnen eines Verschleißes des Werkzeuges auf Basis des Spindelstroms. Das Werkzeug kann ein Fräswerkzeug, ein Schleifwerkzeug oder ein Polierwerkzeug sein. Durch das Herstellungsgerät wird beispielsweise der technische Vorteil erreicht, dass ein verschlissenes oder defektes Werkzeug erkannt werden kann.

In einer technisch vorteilhaften Ausführungsform des Herstellungsgeräts ist die Berechnungsvorrichtung ausgebildet, den Verschleiß aus mehreren gemessenen Werten des Spindelstroms zu berechnen. Dadurch wird beispielsweise der technische Vorteil erreicht, dass die Genauigkeit der Berechnung verbessert werden kann.

In einer weiteren technisch vorteilhaften Ausführungsform des Herstellungsgeräts ist die Berechnungsvorrichtung ausgebildet, den Spindelstrom aus mehreren gemessenen Werten aufzusummieren oder zu mitteln. Dadurch wird beispielsweise der technische Vorteil erreicht, dass die Berechnung des Spindelstroms weiter verbessert werden kann.

In einer weiteren technisch vorteilhaften Ausführungsform des Herstellungsgeräts ist die Berechnungsvorrichtung ausgebildet, den Verschleiß aus einem gleitenden Zeitfenster für den Spindelstrom zu berechnen. Dadurch wird beispielsweise der technische Vorteil erreicht, dass während einer Bearbeitung genaue und aktuelle Werte für den Spindelstrom erhalten werden.

In einer erfindungsgemäßen Ausführungsform des Herstellungsgeräts ist die Berechnungsvorrichtung ausgebildet, ein Intervall für die mittleren 50 % der Werte des Spindelstroms zu berechnen. Dadurch wird beispielsweise der technische Vorteil erreicht, dass der Wert für den Spindelstrom genau bestimmt werden kann und Ausreißer bei den Werten unberücksichtigt bleiben.

In einer weiteren technisch vorteilhaften Ausführungsform des Herstellungsgeräts ist die Berechnungsvorrichtung ausgebildet, den Verschleiß aus der Breite des Intervalls zu berechnen. Dadurch wird beispielsweise der technische Vorteil erreicht, dass sich ein proportionaler Zusammenhang zwischen der Breite des Intervalls und der Abnutzung ergibt.

In einer weiteren technisch vorteilhaften Ausführungsform des Herstellungsgeräts ist die Berechnungsvorrichtung ausgebildet, den Verschleiß des Werkzeuges proportional zur Breite des Intervalls zu berechnen. Dadurch wird beispielsweise der technische Vorteil erreicht, dass sich die Abnutzung auf einfache und schnelle Art und Weise bestimmen lässt.

In einer weiteren technisch vorteilhaften Ausführungsform des Herstellungsgeräts ist das Herstellungsgerät ausgebildet, den Verschleiß des Werkzeuges bei der Bearbeitung zu kompensieren. Dadurch wird beispielsweise der technische Vorteil erreicht, dass die dentale Restauration auch bei beginnendem verschleiß des Werkzeugs mit einer hohen Genauigkeit hergestellt werden kann.

In einer weiteren technisch vorteilhaften Ausführungsform des Herstellungsgeräts umfasst das Herstellungsgerät eine Ersatzvorrichtung zum Ersetzen eines verschlissenen Werkzeugs durch ein unverschlissenes Werkzeug. Dadurch wird beispielsweise der technische Vorteil erreicht, dass ein verbrauchtes Werkzeug auf einfache Art und Weise ersetzt werden kann.

In einer weiteren technisch vorteilhaften Ausführungsform des Herstellungsgeräts ist die Ersatzvorrichtung ausgebildet, das Werkzeug bei einem Überschreiten eines vorgegebenen Verschleißes automatisch zu wechseln. Dadurch wird beispielsweise der technische Vorteil erreicht, dass die Bearbeitung bei einem verschlissenem Werkzeug unmittelbar mit einem neuen Werkzeug fortgesetzt werden kann. Zudem wird kein Material verschwendet oder Ausschuss produziert. Die Daten könnten auch gespeichert werden und zu Qualitätszwecke verwendet werden.

Gemäß einem zweiten Aspekt wird die technische Aufgabe durch ein Herstellungsverfahren für eine dentale Restauration gelöst, mit den Schritten eines Erfassens eines Spindelstroms einer Drehspindel; und eines Berechnens eines Verschleißes des Werkzeuges auf Basis des Spindelstroms. Durch das Herstellungsverfahren werden die gleichen technischen Vorteile wie durch das Herstellungsgerät nach dem ersten Aspekt erreicht.

In einer technisch vorteilhaften Ausführungsform des Herstellungsverfahrens wird der Verschleiß aus mehreren gemessenen Werten des Spindelstroms berechnet. Dadurch wird beispielsweise ebenfalls der technische Vorteil erreicht, dass die Genauigkeit der Berechnung verbessert werden kann.

In einer weiteren technisch vorteilhaften Ausführungsform des Herstellungsverfahrens wird der Verschleiß aus einem gleitenden Zeitfenster für den Spindelstrom berechnet. Dadurch wird beispielsweise ebenfalls der technische Vorteil erreicht, dass die Berechnung des Spindelstroms weiter verbessert werden kann.

In einer erfindungsgemäßen Ausführungsform des Herstellungsverfahrens wird ein Intervall für die mittleren 50 % der Werte des Spindelstroms berechnet. Dadurch wird beispielsweise ebenfalls der technische Vorteil erreicht, dass der Wert für den Spindelstrom genau bestimmt werden kann und Ausreißer bei den Werten unberücksichtigt bleiben.

In einer weiteren technisch vorteilhaften Ausführungsform des Herstellungsverfahrens wird der Verschleiß aus der Breite des Intervalls berechnet. Dadurch wird beispielsweise ebenfalls der technische Vorteil erreicht, dass sich ein proportionaler Zusammenhang zwischen der Breite des Intervalls und der Abnutzung ergibt.

Ausführungsbeispiele der Erfindung sind in den Zeichnungen dargestellt und werden im Folgenden näher beschrieben.

Es zeigen:
- Fig. 1: eine schematische Darstellung eines Herstellungsgerät für eine dentale Restauration;
- Fig. 2: eine Abweichung von Soll- und Ist-Maß über verschiedene Prüfkörper;
- Fig. 3: eine Ansicht eines Fräswerkzeugs;
- Fig. 4: eine schematische Verteilung von Messwerten für den Spindelstrom;
- Fig. 5: mehrere Interquartilsabstände in Abhängigkeit von Soll-Ist-Differenzen von konsekutiv gefertigten Prüfkörpern; und
- Fig. 6: ein Blockdiagram eines Herstellungsverfahrens für eine dentale Restauration.

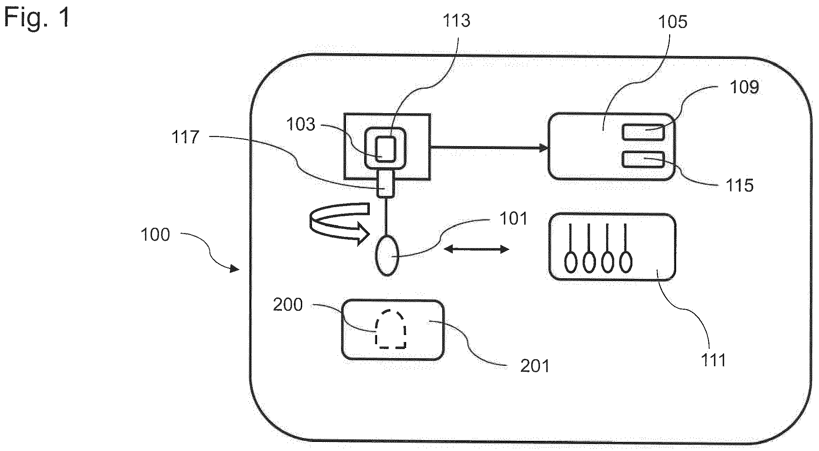

Fig. 1 zeigt eine schematische Darstellung eines Herstellungsgeräts 100 für eine dentale Restauration 200. Die dentale Restauration 200 ist beispielsweise eine Krone, eine Brücke, ein Veneer, ein Abutment, ein Inlay, ein Onlay, eine Schiene oder eine Teil- oder Vollprothese.

Das Herstellungsgerät 100 umfasst ein Werkzeug 101 zum Bearbeiten eines Rohlings 201, wie beispielsweise ein Fräswerkzeug oder ein Schleifwerkzeug. Durch das Werkzeug 101 wird der Rohling 201 mittels eines spanabhebenden Verfahrens in die gewünschte Form der dentalen Restauration 200 gebracht. Der Rohling ist beispielsweise eine Scheibe aus Zirkonoxid. Das Werkzeug 101 wird durch einen Elektromotor 113 angetrieben und mittels einer Drehspindel 117 in Drehungen versetzt. Hierbei fließt ein elektrischer Spindelstrom durch den Elektromotor 113 der Drehspindel 117.

Das Herstellungsgerät 100 umfasst zusätzlich eine Erfassungsvorrichtung 103 zum Erfassen des Spindelstroms der Drehspindel 117 für das Werkzeug 101 bei der Bearbeitung des Rohlings 201. Die Erfassungsvorrichtung 103 kann einen Stromsensor umfassen, der den elektrischen Strom misst, der durch den Elektromotor 113 fließt. Die Erfassung des Spindelstroms kann anhand von vorhandenen Sensor- bzw. Maschinendaten geschehen, so dass keine zusätzlichen Sensoren verwendet werden. Je höher die Werte, wie beispielsweise die Standardabweichung oder der IQR, des elektrischen Spindelstroms bei der Bearbeitung sind, desto größer ist die Abnutzung des Werkzeugs 101. Je höher der IQR ist, desto größer die Abnutzung des Werkzeuges 101. Durch den Stromsensor können beispielsweise kontinuierlich digitale Werte für den Spindelstrom erhalten werden.

Um den genauen Verschleiß des Werkzeuges 101 zu berechnen, umfasst das Herstellungsgerät 100 eine Berechnungsvorrichtung 105. Diese kann durch einen Mikroprozessor 115 mit einem Speicher 109 gebildet sein. Der Mikroprozessor 115 erhält die digitalen Werte für den Spindelstrom und verarbeitet diese durch einen Algorithmus, um einen digitalen Wert für den Verschleiß zu erhalten. Der digitale Wert für den Verschleiß kann dann in dem Speicher 109 abgelegt werden.

Die Berechnungsvorrichtung ist dadurch in der Lage kontinuierlich und in Echtzeit den Verschleiß des Werkzeuges 101 auf Grundlage des Spindelstroms zu berechnen. Der Spindelstrom wird zur Analyse des Zustands des Werkzeuges 101 verwendet. Beispielsweise kann der Zustand des Werkzeugs 101 beim Bearbeiten von dentalen Glaskeramiken mittels des Spindelstroms ermittelt werden.

Die Berechnungsvorrichtung 105 kann aber auch ausgebildet sein, einem erfassten Spindelstrom einen vorgegebenen Verschleiß des Werkzeuges 101 zuzuordnen. In diesem Fall kann eine digitale Nachschlagetabelle (Look Up Table) verwendet werden, um jeweils einem Wert für den Spindelstrom einen entsprechenden Verschleiß des Werkzeugs 101 zuzuordnen.

Beispielsweise kann hierdurch der tatsächliche Zustand des Werkzeugs 101 bei jedem Bearbeitungsvorgang ermittelt werden. Hierdurch können alte, verbrauchte oder defekte Werkzeuge rechtzeitig erkannt werden. Eine Abweichung der Dimension in der Herstellung kann anhand der ermittelten Abnutzung des Werkzeuges 101 korrigiert werden.

Das Herstellungsgerät 100 kann ebenfalls eine Drehgeschwindigkeit des Werkzeuges 101 auf Basis des erfassten Spindelstroms steuern. Ab einem vorgegebenen Wert des Verschleißes kann die Drehgeschwindigkeit, die Zustellung und/oder der Vorschub des Werkzeugs 101 angepasst oder verringert werden. Dadurch kann die Belastung des Werkzeugs 101 am Ende seiner Lebensdauer verringert werden. Durch das Herstellungsgerät 100 wird die Qualität der dentalen Restauration erhöht und es wird weniger Ausschuss produziert.

Der ermittelte Verschleiß des Werkzeuges 101 kann anschließend bei der Bearbeitung der dentalen Restauration 200 kompensiert werden. Beträgt der Verschleiß des Werkzeuges 101 beispielsweise 5 µm, so kann dieser Wert beim Fräsen zu einer Ist-Position des Werkzeugs 101 hinzugerechnet werden, um eine gewünschte Sollposition zu erhalten. Dadurch lässt sich die dentale Restauration 200 auch bei teilweise abgenutztem Werkzeug 101 in der gewünschten Abmessung herstellen.

Des Weiteren kann das Herstellungsgerät 100 eine Ersatzvorrichtung 111 zum Ersetzen eines verschlissenen Werkzeugs 101 durch ein unverschlissenes Werkzeug 101 umfassen. Zu diesem Zweck werden beispielsweise mehrere identische Werkzeuge 101 in einem Magazin bereitgestellt. Sobald das Werkzeug 101, mit dem eine Bearbeitung der dentalen Restauration 200 durchgeführt wird, einen vorgegebenen Verschleiß aufweist, wird dieses automatisch durch ein neues Werkzeug 101 aus dem Magazin ersetzt, beispielsweise durch einen elektromechanischen Wechselmechanismus oder Greifer. Dadurch können zahlreiche dentale Restaurationen 200 in Serie gefertigt werden, ohne dass ein Benutzereingriff erforderlich ist.

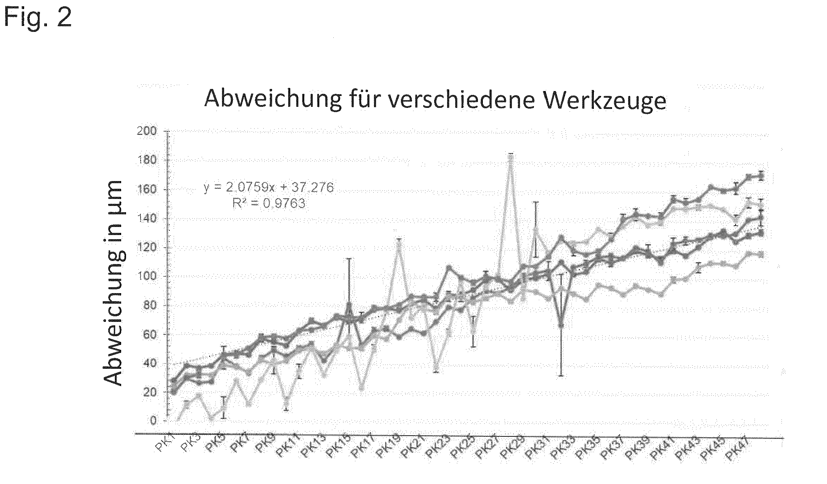

Fig. 2 zeigt eine Abweichung von Soll- und Ist-Maß für unterschiedliche Werkzeuge 101 über eine zunehmende Anzahl von Prüfkörpern PK. Je älter das Werkzeug ist, desto weiter ist das Ist-Maß (gemessen am Bauteil) vom Soll-Maß entfernt. Die Abweichung nimmt pro Prüfkörper um 2 µm zu.

Die zunehmende Abweichung kann zu Ausschuss bei der Herstellung führen. Das heißt beispielsweise bei einer Krone, dass das Loch um 2 µm je hergestellter Krone kleiner wird. Nach einer Anzahl von ca. 40 Prüfkörpern (Abweichung 80 µm) passt die Krone nicht mehr auf den Stumpf. In diesem Fall passen beispielsweise eine hergestellte Krone oder Brücke bei einem Patienten nicht, weil die Dimensionen nicht stimmen.

Wird eine Abweichung anhand des Spindelstroms bestimmt, genügt bei einer hohen Abtastrate eine Analyse über 10 Sekunden, um einen Verschleiß zu bestimmen. Der Zustand des Werkzeugs 101 kann auf ±7 Prüfkörper genau vorehrgesagt werden, was einer Abweichung von ca. ± 14 µm entspricht. Je gefrästen Prüfkörper entsteht ein Verschleiß am Werkzeug von ca. 2 µm.

Die Abtastrate beschreibt jene Frequenz, mit der ein analoges Signal innerhalb einer bestimmten Zeit gelesen und in ein zeitdiskretes Signal umgewandelt wird. Die Abtastrate für den Spindelstrom beträgt beispielsweise 10 kHz. Dadurch lassen sich in einer Sekunde 10.000 Messwerte für den Spindelstrom erhalten.

Der Spindelstrom kann in einem gleitenden Zeitfenster erfasst werden, so dass stets die Messwerte des Spindelstroms für einen vorgegebenen zurückliegenden Zeitraum verwendet werden. Das Zeitfenster umfasst daher eine vorgegebene Menge von jüngeren Messwerten. Dies führt dazu, dass ältere Messwerte, die aus dem gleitenden Zeitfenster herausfallen, bei der Berechnung des Spindelstroms nicht mehr berücksichtigt werden.

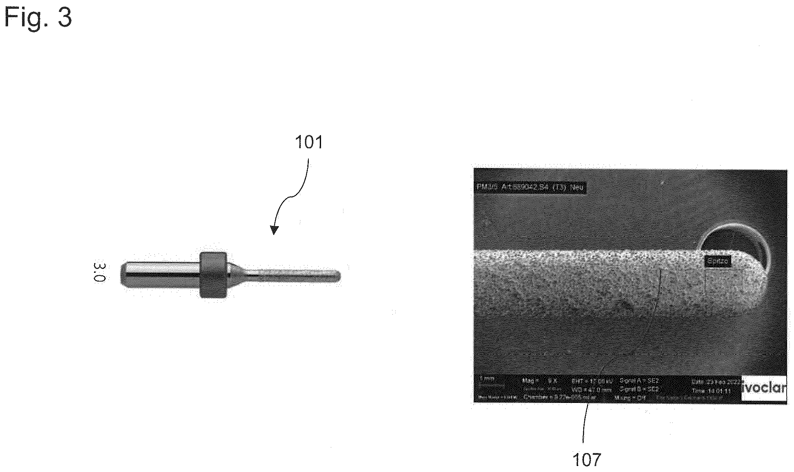

Fig. 3 zeigt eine Ansicht eines Werkzeugs 101. Das Werkzeug kann beispielsweise ein Schleifer oder ein Fräser für die dentale Restauration 200 sein. Das Werkzeug 101 umfasst beispielsweise eine mit Diamanten besetzte Fräsfläche 107. Die Fräsfläche 107 steht in Kontakt mit dem Rohling 201, um die dentale Restauration aus diesem heraus zu fräsen.

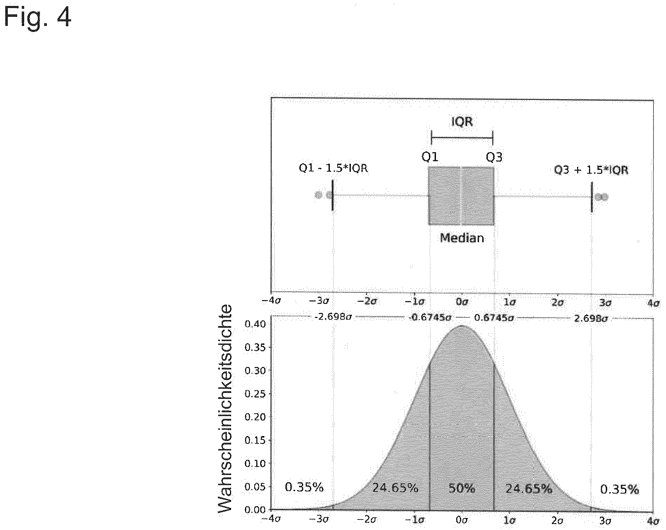

Fig. 4 zeigt eine schematische Verteilung von Messwerten für den Spindelstrom. Die Wahrscheinlichkeitsdichte für den Spindelstrom ist in Abhängigkeit der Standardabweichung σ aufgetragen.

Zur Berechnung des Spindelstroms können mehrere Messwerte verwendet werden. Aus einer Menge von unterschiedlichen Messwerten für den Spindelstrom, können diejenigen 50% bestimmt werden, die am nächsten um einen Mittelwert herum verteilt sind. Wird eine Stichprobe der Messwerte der Größe nach sortiert, so gibt der Interquartilsabstand (IQR - Interquartile Range) an, wie breit das Intervall Q1 bis Q3 ist, in dem die mittleren 50 % der Stichprobeelemente liegen.

Der Interquartilsabstand der Messwerte für den Spindelstrom kann ebenfalls verwendet werden, um die Abnutzung des Werkzeugs 101 zu bestimmen. Beispielsweise kann der Interquartilsabstand der Messwerte für den Spindelstrom während dem Fräsprozess der dentalen Restauration 200 ermittelt werden. Dies kann aber auch nachgelagert geschehen. Der Interquartilsabstand steigt linear mit der Abnutzung des Werkzeugs 101 an. Der Dimensionsfehler steigt ebenfalls durch die Abnutzung an der dentalen Restauration linear an. Daher ist es möglich aus dem Interquartilsabstand die Abnutzung des Werkzeugs zu bestimmen.

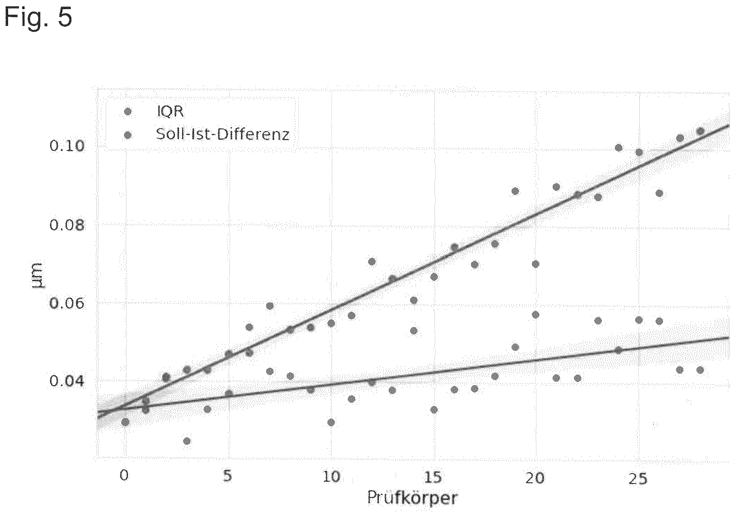

Fig. 5 zeigt Interquartilsabstände in Abhängigkeit von Soll-Ist-Differenzen konsekutiv gefertigter Prüfkörper mit einem Werkzeug und stellt somit die Korrelation zwischen Abnutzung des Werkzeugs und dem IQR visuell dar. Auf der X-Achse ist die Anzahl der gefertigten Prüfkörper aufgetragen. Auf der Y-Achse ist eine Differenz zwischen einem Sollmaß und einem Ist-Maß und ein Interquartilsabstand IQR in µm. Je größer die Differenz zwischen dem Sollmaß und dem Ist-Maß ist, desto größer ist der Interquartilsabstand IQR aus den Messwerten des Spindelstroms.

Der Interquartilsabstand IQR des Spindelstromes verhält sich linear mit der Abnutzung des Werkzeugs 101. Daher kann der tatsächliche Zustand des Werkzeugs 101 in Echtzeit ("On The Fly") aus dem bestimmten Interquartilsabstand IQR ermittelt werden. Der Interquartilsabstand verhält sich, wie die Dimensionsabweichung (MAE - Mean Absolute Error: 0.015 - 0.022 mm).

Zunächst wird eine Menge an Messwerten für den Spindelstrom bestimmt. Aus diesen Messwerten wird der Interquartilsabstand IQR berechnet. Je größer dieser Interquartilsabstand ist, desto größer ist der Verschleiß des Werkzeuges 101.

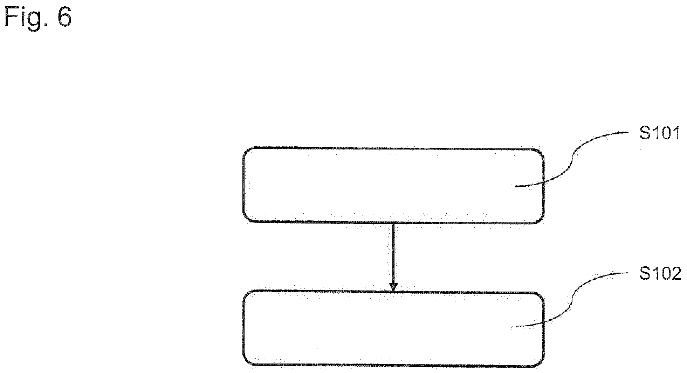

Fig. 6 zeigt ein Blockdiagram eines Herstellungsverfahrens für die dentale Restauration 200. Im ersten Schritt S101 wird der Spindelstrom des Drehspindel 117 erfasst. Hierbei kann eine Vielzahl von Messwerten für den Spindelstrom erfasst werden.

Im anschließenden Schritt S102 wird der Verschleiß des Werkzeuges 101 auf Basis des Spindelstroms berechnet. Hierzu können die Messwerte ausgewertet werden, so dass beispielsweise ein Interquartilsabstand aus diesen bestimmt wird. Aus dem Interquartilsabstand wird der Verschleiß des Werkzeugs 101 bestimmt, beispielsweise indem dieser mit einem Proportionalitätsfaktor multipliziert wird. Diese Schritte können durch die Berechnungsvorrichtung 105 durchgeführt werden.

Durch das Herstellungsverfahren kann der Zustand eines Werkzeugs auf der Maschine ohne zusätzliche Sensordaten, Mikroskop oder sonstige technischen Hilfsmittel bestimmt werden.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Herstellungsgerät
- 101: Werkzeug
- 103: Erfassungsvorrichtung
- 105: Berechnungsvorrichtung
- 107: Fräsfläche
- 109: digitaler Speicher
- 111: Ersatzvorrichtung
- 113: Elektromotor
- 115: Mikroprozessor
- 117: Drehspindel

- 200: Dentale Restauration
- 201: Rohling

## Patentansprüche

1. Herstellungsgerät (100) für eine dentale Restauration (200), mit:
- einem Werkzeug (101) zum Bearbeiten eines Rohlings (201);
- einer Erfassungsvorrichtung (103) zum Erfassen eines Spindelstroms einer Drehspindel (117); und
- einer Berechnungsvorrichtung (105) zum Berechnen eines Verschleißes des Werkzeuges (101) auf Basis des Spindelstroms, **dadurch gekennzeichnet, dass** die Berechnungsvorrichtung (105) ausgebildet ist, ein Intervall für die mittleren 50 % der Werte des Spindelstroms zu berechnen.

2. Herstellungsgerät (100) nach Anspruch 1, wobei die Berechnungsvorrichtung (105) ausgebildet ist, den Verschleiß aus mehreren gemessenen Werten des Spindelstroms zu berechnen.

3. Herstellungsgerät (100) nach Anspruch 2, wobei die Berechnungsvorrichtung (105) ausgebildet ist, den Spindelstrom aus mehreren gemessenen Werten aufzusummieren oder zu mitteln.

4. Herstellungsgerät (100) nach einem der vorangehenden Ansprüche, wobei die Berechnungsvorrichtung (105) ausgebildet ist, den Verschleiß aus einem gleitenden Zeitfenster für den Spindelstrom zu berechnen.

5. Herstellungsgerät (100) nach Anspruch 1, wobei die Berechnungsvorrichtung (105) ausgebildet ist, den Verschleiß aus der Breite des Intervalls zu berechnen.

6. Herstellungsgerät (100) nach Anspruch 5, wobei die Berechnungsvorrichtung (105) ausgebildet ist, den Verschleiß des Werkzeuges (101) proportional zur Breite des Intervalls zu berechnen.

7. Herstellungsgerät (100) nach einem der vorangehenden Ansprüche, wobei das Herstellungsgerät (100) ausgebildet ist, den Verschleiß des Werkzeuges (101) bei der Bearbeitung zu kompensieren.

8. Herstellungsgerät (100) nach einem der vorangehenden Ansprüche, wobei das Herstellungsgerät (100) eine Ersatzvorrichtung (111) zum Ersetzen eines verschlissenen Werkzeugs (101) durch ein unverschlissenes Werkzeug (101) umfasst.

9. Herstellungsgerät (100) nach Anspruch 8, wobei die Ersatzvorrichtung (111) ausgebildet ist, das Werkzeug (101) bei einem Überschreiten eines vorgegebenen Verschleißes automatisch zu wechseln.

10. Herstellungsverfahren für eine dentale Restauration (200), mit den Schritten:
- Erfassen (S101) eines Spindelstroms einer Drehspindel (117); und
- Berechnen (S102) eines Verschleißes des Werkzeuges (101) auf Basis des Spindelstroms, wobei ein Intervall für die mittleren 50 % der Werte des Spindelstroms berechnet wird.

11. Herstellungsverfahren nach Anspruch 10, wobei der Verschleiß aus mehreren gemessenen Werten des Spindelstroms berechnet wird.

12. Herstellungsverfahren nach Anspruch 10 oder 11, wobei der Verschleiß aus einem gleitenden Zeitfenster für den Spindelstrom berechnet wird.

13. Herstellungsverfahren nach Anspruch 10, wobei der Verschleiß aus der Breite des Intervalls berechnet wird.

## Claims

1. A manufacturing device (100) for a dental restoration (200), comprising:
- a tool (101) for machining a blank (201);
- a detection device (103) for detecting a spindle current of a turning spindle (117); and
- a calculating device (105) for calculating wear of the tool (101) based on the spindle current,
**characterized in that** the calculating device (105) is configured to calculate an interval for the average 50% of the values of the spindle current.

2. The manufacturing device (100) according to claim 1, wherein the calculating device (105) is configured to calculate the wear from a plurality of measured values of the spindle current.

3. The manufacturing device (100) according to claim 2, wherein the calculating device (105) is configured to sum or average the spindle current from a plurality of measured values.

4. The manufacturing device (100) according to any one of the preceding claims, wherein the calculating device (105) is configured to calculate the wear from a sliding time window for the spindle current.

5. The manufacturing device (100) according to claim 1, wherein the calculating device (105) is configured to calculate the wear from the width of the interval.

6. The manufacturing device (100) according to claim 5, wherein the calculating device (105) is configured to calculate the wear of the tool (101) in proportion to the width of the interval.

7. The manufacturing device (100) according to any one of the preceding claims, wherein the manufacturing device (100) is configured to compensate for the wear of the tool (101) during the machining process.

8. The manufacturing device (100) according to any one of the preceding claims, wherein the manufacturing device (100) comprises a replacement device (111) for replacing a worn tool (101) with an unworn tool (101).

9. The manufacturing device (100) according to claim 8, wherein the replacement device (111) is configured to automatically change the tool (101) when a predetermined wear level is exceeded.

10. A manufacturing method for a dental restoration (200), comprising the steps of:
- detecting (S101) a spindle current of a turning spindle (117); and
- calculating (S102) wear of the tool (101) based on the spindle current, wherein an interval is calculated for the average 50% of the values of the spindle current.

11. The manufacturing method according to claim 10, wherein the wear is calculated from a plurality of measured values of the spindle current.

12. The manufacturing method according to claim 10 or 11, wherein the wear is calculated from a sliding time window for the spindle current.

13. The manufacturing method according to claim 10, wherein the wear is calculated from the width of the interval.

## Revendications

1. Appareil de fabrication (100) pour une restauration dentaire (200), avec :
- un outil (101) pour l'usinage d'un lingotin (201) ;
- un dispositif de détection (103) pour détecter un courant de broche d'une broche rotative (117) ; et
- un dispositif de calcul (105) pour calculer une usure de l'outil (101) sur la base du courant de broche,
**caractérisé en ce que** le dispositif de calcul (105) est conçu pour calculer un intervalle pour les 50 % médians des valeurs du courant de broche.

2. Appareil de fabrication (100) selon la revendication 1, où le dispositif de calcul (105) est conçu pour calculer l'usure à partir de plusieurs valeurs mesurées du courant de broche.

3. Appareil de fabrication (100) selon la revendication 2, où le dispositif de calcul (105) est conçu pour additionner ou calculer la moyenne du courant de broche à partir de plusieurs valeurs mesurées.

4. Appareil de fabrication (100) selon l'une des revendications précédentes, où le dispositif de calcul (105) est conçu pour calculer l'usure à partir d'une fenêtre de temps glissante pour le courant de broche.

5. Appareil de fabrication (100) selon la revendication 1, où le dispositif de calcul (105) est configuré pour calculer l'usure à partir de la largeur de l'intervalle.

6. Appareil de fabrication (100) selon la revendication 5, où le dispositif de calcul (105) est configuré pour calculer l'usure de l'outil (101) proportionnellement à la largeur de l'intervalle.

7. Appareil de fabrication (100) selon l'une des revendications précédentes, où l'appareil de fabrication (100) est conçu pour compenser l'usure de l'outil (101) lors de l'usinage.

8. Appareil de fabrication (100) selon l'une des revendications précédentes, où l'appareil de fabrication (100) comprend un dispositif de remplacement (111) pour remplacer un outil usé (101) par un outil non usé (101).

9. Appareil de fabrication (100) selon la revendication 8, où le dispositif de remplacement (111) est conçu pour changer automatiquement l'outil (101) lors d'un dépassement d'une usure prédéterminée.

10. Procédé de fabrication d'une restauration dentaire (200), comprenant les étapes consistant à :
- détecter (S101) un courant de broche d'une broche rotative (117) ; et
- calculer (S102) une usure de l'outil (101) sur la base du courant de la broche, où un intervalle est calculé pour les 50 % médians des valeurs du courant de broche.

11. Procédé de fabrication selon la revendication 10, où l'usure est calculée à partir de plusieurs valeurs mesurées du courant de broche.

12. Procédé de préparation selon la revendication 10 ou 11, où l'usure est calculée à partir d'une fenêtre de temps glissante pour le courant de broche.

13. Procédé de préparation selon la revendication 10, où l'usure est calculée à partir de la largeur de l'intervalle.
